# EUROPEAN PATENT SPECIFICATION

(11) **EP 3 053 991 B1**
(45) Date of publication and mention of the grant of the patent: **27.03.2019**
(21) Application number: 16154529.8
(22) Date of filing: 05.02.2016
(51) Int. Cl.: C10G 33/00, C10G 9/00, C10G 1/02, C02F 1/28, C10B 55/00, C10B 57/00, C02F 103/36

(54) **PROCESS FOR TREATING RESIDUES IN COKE DRUMS OF DELAYED COKING UNITS**
VERFAHREN ZUR BEHANDLUNG VON RÜCKSTÄNDEN IN KOKSTROMMELN VON VERZÖGERTEN KOKSBILDUNGSEINHEITEN
PROCÉDÉ DE TRAITEMENT DE RÉSIDUS DANS DES CHAMBRES DE COKÉFACTION DES UNITÉS DE COKÉFACTION RETARDÉE

(30) Priority: 06.02.2015 BR 102015002629
(43) Date of publication of application: 10.08.2016
(73) Proprietor: Petróleo Brasileiro S.A. Petrobras, Rio de Janeiro, RJ (BR)
(72) Inventor: Franco de Campos, Raphael, 13025-250 SP (BR); Lázaro, Weimar, 20540-130 Rio de Janeiro (BR)
(74) Representative: J A Kemp

(56) References cited:
- BR-A- PI0 502 441
- US-A- 4 666 585
- US-A- 5 068 024
- US-A- 5 114 564

## Description

The present invention relates to the treatment of residues in oil refineries. More particularly, the present invention relates to minimization of refinery residues by processing liquid residues from refineries in drums of delayed coking units (DCUs) during the coke bed purge phase with steam.

Oil refineries have stocks of residual oils (also referred to as residues) in quite high volumes and the cost of disposal of these, already significant, is tending to increase. A proportion of the residues is reprocessed internally in the refineries in certain processing units, but this reprocessing may compete with the processing of so-called fresh feedstocks or cause instabilities that may even lead to reductions of loading of the units.

Some refineries centrifuge their residues and send the solid extract for processing in cement works, for example. Others, because of internal problems in the disposal of liquid residues, need to send them without centrifugation, generating even higher costs owing to the larger volumes. The costs of processing and transporting these residues are quite significant.

The solid residues generated in petroleum refining generally include: spent catalysts, biological sludge, sludge from rainwater ditches, oil wastes generated at the bottom of tanks for petroleum and derivatives, oil-contaminated solids, absorbent clays, sediments from process equipment, from materials generated during stoppages and in maintenance operations, coke fines, among others. Even with centrifugation, there are still large stocks of residues, predominantly liquid (oil and water).

The reprocessing of residues in refineries may take place in various processing units, depending on the quality of the residues. The DCU is the unit of first choice owing to its versatility. Depending on its specific characteristics, the residue may enter the unit at various alternative points during its normal operation of filling the drums with feed, but typically it is admitted through the blowdown system (and may be admitted in any of its blowdown vessels or towers), the top vessel of the fractionating tower (light residues free from solids), the feed vessel or directly as feed for the drums in the filling phase.

When the residue enters the unit by one of the means described above, it has the potential to:
a) reduce the feed of the unit (by competition with the fresh feed or if the performance of some piece of equipment that already possesses some bottleneck is compromised);
b) contaminate product streams;
c) leave residues deposited in some items of equipment, even affecting the campaign of the unit;
d) affect the performance of some items of equipment, with special reference to the furnace or heat exchangers (fouling);
e) cause some type of operational disturbance, bearing in mind that residues are not completely homogeneous, etc.

As can be seen, the form in which reception of external streams in the DCUs is processed at present (via the blowdown system of the DCUs, via the top vessel of the fractionating tower or via the feed vessel) may limit the flow rate of potential processing of the feed of the units or the maximum capacity of residue processing.

Independently of the effect that they have on the performance of the unit, the residues, when processed in the manner suggested above, have fairly limited processability and when they compete with the feed of the unit or reduce its campaign, the economic aspect normally becomes unfavourable and there is a natural resistance on the part of the plant operator to said processing, although aware of the potential contribution of the DCU to the refinery.

The use of delayed coking units (DCUs) for disposal of liquid residues is well known in the literature and in industrial practice. Since the 1970s, techniques have been known for injecting residues directly into the coke drum, not in its filling phase, but in the water-quench cooling phase after formation of the solid coke bed (thus not affecting the loading capacity of the unit). The common origin of the technique is based on the MOSC (Mobil Oil Sludge Conversion) process, developed in 1975 by the Mobil Oil Company. The original patent of this process is US 3,917,564.

The processing of residues for injection into the coke bed has evolved, and of necessity is carried out in two steps: the first being a step of preparing the residual feed (treatment in tanks with demulsifying products, separation in three-phase centrifuges, grinding the solids and preparing a suspension with solids of suitable concentration for injection and granulometry typically under 100µm), usually outsourced, and then the step of injection into the coke bed, which is carried out under the control of DCU operation.

The use of companies supplying outsourced services for preparing suspensions that are injected into coke drums is an internationally known practice, but causes costs and possibly presupposes the presence of persons who are not refinery personnel, especially if the outsourced unit has been installed internally (with the inherent personal risks).

An elegant, internationally known alternative for processing residues puts the centrifuged solid effluents, in the form of suspension, in drums of delayed coking units (DCUs) in the cooling phase of the drums. The step of prior preparation of the residues is carried out by specialized service companies. This step of the process consists of treating refinery tanks by the use of demulsifying chemicals and separation in three-phase centrifuges (the liquid phases may be suitably directed in the refinery itself once separated into aqueous and oily before injection into the coke bed), grinding the solids and preparing a suspension with solids of suitable granulometry and concentration for injection (pumping) during the cooling phase of the coke reactors. This last step takes place under the control of DCU operation.

Carrying out this type of service is not the "core business" of the oil companies, which is why some companies that are also dominant in the provision of services for treatment with chemicals predominate in this market.

Thus, the search for alternatives for minimizing volumes is important, especially if the services can be carried out by the operation itself. Accordingly, the refineries have mobilized in individual efforts for carrying out separation and treatment of their residual oils from tanks, using centrifuges and chemicals that promote water-oil separation in most cases.

In this connection, document US 5,490,918 A, with the title *"Sludge disposal process",* discloses a process for disposal of industrial wastes, more specifically, of residual fuel oil in delayed coking processes for heavy petroleum fractions. In this process, after the initial steam purging and directing the top vapours to the "blowdown" systems and vapour recovery from the unit, the residual fuel oil is injected into the coke drum during the cooling phase with steam, followed by subsequent cooling with water. Therefore, this document does not envisage taking advantage of the temperature (thermal energy) of the coke drum immediately before the purge phase with steam. Equally, no advantage is taken of the motive force inherent in the high-pressure steam injected in the purge phase of the process for conveying the residue efficiently.

Moreover, other documents are known that try to minimize the residues in oil refineries. Document BRPI0502441-2A describes a process for reducing residues in DCUs. More precisely, this document discloses injection of a fraction of a stream of heavy gas oil from coke (HGO) into the feed line of the blowdown vessel, partially replacing the amount of water injected, so that the resultant mixture of hydrocarbons and water from the purge and cooling phase (arising from purge and cooling of the coke drum) and the HGO injected will undergo separation in a blowdown vessel. The aim of this is to minimize injection of water and formation of steam in the system, optimizing the energy balance of the unit and thus reducing the formation of residues in the process.

US 5,114,564 discloses a process according to the pre-characterising portion of claim 1.

### SUMMARY OF THE INVENTION

A first aim of the present invention is to provide a process that minimizes the quantity of volumes (residues) generated in the refinery, improving the processing costs and gains in oil recovery.

A second aim of the present invention is to provide a process with expandable and adaptable characteristics that operates with residues internal or external to the refinery, in higher flow rates and with fewer potential negative effects than those employed currently, that is simpler and economically advantageous.

In order to achieve the aims described above, the present invention provides a process for treating residues in coke drums of a delayed coking unit (DCU) according to claim 1.

As such the invention endeavours to treat the residual oils arising from processes of petroleum refining, without the need for pre-treatment with chemicals and preliminary separation of the oily and aqueous phases, simplifying the pre-existing processes. This treatment is carried out by injecting the residues into the coke drums, specifically from the beginning of the coke bed purge phase, and this is preferably carried out with pressurized steam. It is possible for the duration of the injection process to extend to the next phase, i.e. the cooling phase, which is carried out by pumping liquid water into the coke bed, thus permitting an even greater volume of injection depending on the interests of the refinery.

The invention allows the use of the existing systems - with a minimum of modifications to the design of the unit - and is based on the principle of using the actual coke bed formed inside the coke drums as filtering medium for retaining the solid particles, avoiding deposition thereof in the vessels, towers and exchangers in the blowdown system. By utilizing the thermal energy accumulated in the coke bed, separation of the oil (i.e. organic) and water (i.e. aqueous) phases is promoted naturally, avoiding the need to use demulsifying chemicals. Instead, the separation can take place in the existing blowdown system, with the liquid streams being recovered according to their boiling points in the main fractionating tower of the unit, and the water separated naturally sent to the system for acid waters in the existing circuit.

The present invention injects the residues in the purge phase, preferably together with the high-pressure steam. In this way, besides benefiting from the thermal energy of the coke drum for separating the residual oils from the liquid residues (which are normally emulsified, the injection thus enabling dispensing with the subsequent need to use demulsifying products), the invention can also benefit from the motive force of the steam in the purge phase of the process (where the temperature is far higher than in the subsequent cooling phase, for example).

The processing described in the present invention gives the operator (refiner) total control and autonomy for injection of residues, possibly leaving the volume of the stock of solids in the refinery residues sufficiently reduced. The cost of disposal becomes competitive with the cost of engaging an outsourcing company for this processing. Exceptionally, depending on the solids content of the residual feeds and the desired level of processing to be achieved by the refinery, it is possible to employ industrial two-phase decanter centrifuges with the aim of guaranteeing that there will not be any blockages of the coke bed by more-concentrated suspensions. The two-phase centrifuges, in contrast to the three-phase ones, are of dedicated use in refineries and in the areas of exploration and production, and are less expensive and very robust.

Optionally, the purge phase begins after the maximum level of coke in the drum has been reached.

Optionally, the injecting of the residues into the coke drum occurs together with pressurized steam.

Optionally, the purge phase is carried out with steam at a temperature of from 450°C to 500°C, optionally from 470°C to 490°C, further optionally of about 480°C.

The process comprises a step of cooling, after the purge phase, the deposited coke. The cooling step comprises using liquid water to cool the deposited coke.

Optionally, the cooling step can be halted when a column of liquid water forms that fills the empty space of the coke drum up to its maximum level.

Optionally, the cooling step can be halted when the temperature at the surface of the coke drum is less than or equal to 100°C.

Optionally the residues are injected directly into the coke drum, dispensing with prior steps of separation of solids or treatments with demulsifying chemicals.

Optionally, the residues are injected into the coke drum after processing in two-phase decanter centrifuges.

Optionally, the residues comprise solid residues generated in petroleum refining.

Optionally, the residues comprise one or more of spent catalysts, biological sludge, mud from rainwater ditches, oil wastes generated at the bottom of tanks for petroleum and derivatives, oil-contaminated solids, absorbent clays, sediments from process equipment, materials generated during stoppages and in maintenance operations, and/or coke fines.

Optionally, the residues comprise oil and water phases.

Optionally, operating the delayed coker unit comprises providing a vacuum residue from a vacuum distillation unit as a feed for the delayed coker unit.

Also disclosed is a process for treating residual oils from refineries in coke drums of delayed coking units (DCU), said process being characterized in that it comprises injection of said residues into coke drums, in the coke bed purge phase, together with pressurized steam.

The process can be characterized in that the purge phase begins after the maximum level of coke in the drum has been reached.

The process can be characterized in that the purge phase is carried out with steam at a temperature of about 480°C.

The process can be characterized in that injection extends as far as the cooling step of the coke bed.

The process can be characterized in that the cooling step of the coke drum begins after the end of the purge, when the steam used in the purge is replaced with liquid water.

The process can be characterized in that the cooling step is halted when a column of liquid water forms that fills the empty spaces of the coke drum up to its maximum level.

The process can be characterized in that the cooling step is halted when the temperature at the surface of the coke drum is less than or equal to 100°C.

The process can be characterized in that the residues are injected directly into the coke drums, dispensing with prior steps of separation of solids or treatments with demulsifying chemicals.

The process can be characterized in that the residues are injected into the coke drums after processing in two-phase decanter centrifuges.

These aims and other advantages of the present invention will become clearer from the description that follows and the appended drawings.

### BRIEF DESCRIPTION OF THE FIGURES

The detailed description presented hereunder refers to the appended figures, where:
Fig. 1 shows schematically a delayed coking unit, according to the prior art.

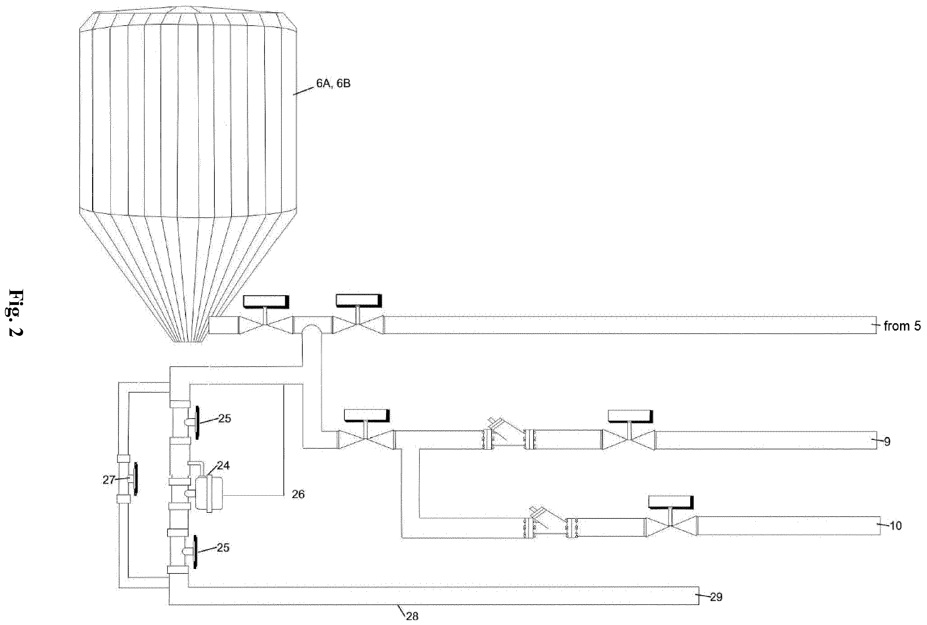

Fig. 2 shows a coke drum and the incoming streams, according to the present invention.

### DETAILED DESCRIPTION OF THE INVENTION

The description that follows presents preferred embodiments of the invention. As will be obvious to a person skilled in the art, however, the invention is not limited to these particular embodiments.

In conventional processing, petroleum passes through an atmospheric distillation unit, where most of the cuts of derivatives are separated and if necessary are processed in other units. The bottom product, known as atmospheric residue, can be sent to a vacuum distillation unit, where greater efficiency in separation of the cuts of derivatives is achieved, and a vacuum residue can be produced at the bottom of the vacuum distillation tower.

Thus, this vacuum residue from the vacuum distillation unit can be used as a hydrocarbon stream **1** to be used in a delayed coking unit. Conventionally, such vacuum residues can be used, for example, for dilution and use as fuel oil or used as hydrocarbon feed in a deasphalting unit (whose bottom product, known in the art as asphalt residue, can also be diluted and then added to the production of fuel oil).

Nevertheless, the streams to be injected into the coke drum may be a mixture of residues from processing units, as well as residue from a petroleum tank and/or other tanks of a refinery. The increasing demand for cuts of higher grade and the decline in the demand for fuel oil has meant that alternative solutions have been sought for optimizing production. However, it is important to stress that heavier hydrocarbon streams **1** may also undergo delayed coking.

A DCU conventionally operates in a semi-continuous process, i.e. part of the unit operates continuously (feed systems, feed pre-heating, fractionation, furnace and treatments), while part operates in a cyclic, batch-like, process (the system associated with the drums, since these have finite dimensions and solid coke is deposited within them and must be removed periodically by physical processes). The drums are downstream of the furnaces in the reaction process and serve for retaining the solid phase, i.e. the coke, during the filling phase. The blowdown system is designed to meet the cyclic demands, guaranteeing separation of the water-oil-gas phases for operational continuity.

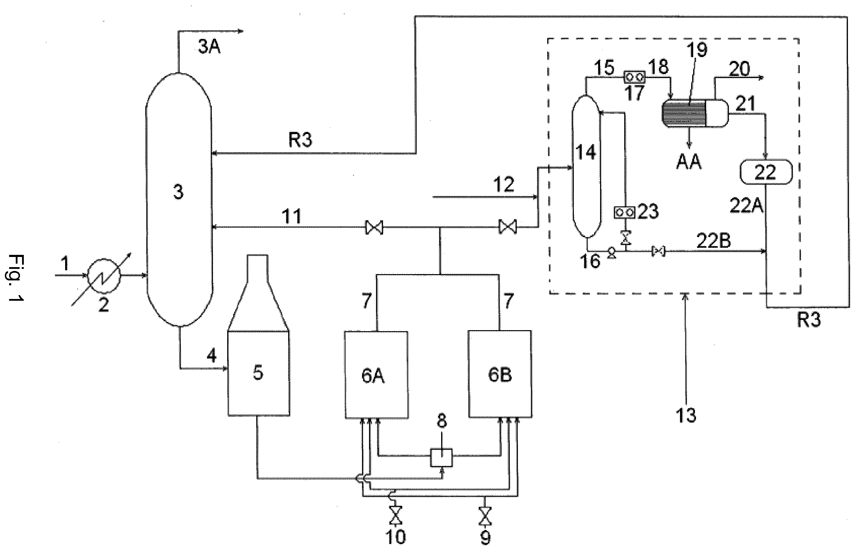

Fig. 1 shows schematically a delayed coking unit (DCU), according to the prior art. A hydrocarbon stream **1** can be heated by one or more heaters **2** before entering a fractionating tower **3.** The top product **3A** from said fractionating tower **3** can be sent to a system for compression and separation (not shown in the figure) where fuel gas, GLP and light naphtha can be obtained, for example. The following fractions can also be obtained in other ("remote") regions of the fractionating tower **3:** heavy naphtha, light gas oil from coke, medium gas oil from coke and heavy gas oil from coke. The bottom product **4** of the fractionating tower **3** can pass through a furnace **5** before being sent to coke drums **6A, 6B** (also known in the prior art as reactors), the place where the various reactions of thermal cracking, condensation and molecular rearrangement can take place that give rise to a gaseous top effluent **7** and a product of extremely high molecular weight, high carbon concentration and low hydrogen concentration, known as coke.

In the coking process, a typical feed of vacuum residue is submitted to temperatures of the order of 500°C at furnace outlet. The reactions of thermal cracking, although begun in the furnaces, are delayed by the injection of an accelerating fluid (boiler water, steam or a distilled product) so that the solid coke resulting from the reaction can be formed and deposited (as a "coke bed") only inside the drums. This deposition occurs as a pasty mass that solidifies as a porous structure (generated by the release of hydrocarbon vapours and water from the interior of the mass) as it cools. Thermal conversion generates hydrocarbons in the vapour phase that can give rise to the whole range of liquid and gaseous products. Those products can be separated in the fractionation system and in the gas recovery system of the unit (from the heaviest molecule of heavy gas oil from coke to fuel gas).

The coke drums **6A, 6B** operate semi-continuously, in an alternating batch process. Thus, the delayed coking units work with one or more three-way valves **8,** which are operated when the maximum level of coke is reached in one of the coke drums **6A.** Accordingly, the stream leaving the furnace **5** (the heated bottom product **4** from the tower **3**) is diverted to the other coke drum **6B,** whilst the coke drum **6A** can undergo steps of purging, cooling, removal of the coke and preparation for entry into production. Usually, two sets of coke drums **6A, 6B** are used, which are alternated two by two, although larger numbers of drums, and sets of drums, may be used.

The semi-continuous nature of the unit is a result of the fact that the drums have finite sizes and thus must operate alterantely in pairs (at least), so that the coke formed can be removed after filling each drum, in a batch operation, without interrupting the overall process. As soon as a drum is filled, the full drum is exchanged for its empty partner in a so-called "switch" operation.

As soon as the exchange or "switch" is carried out, the coke drum **6A** or **6B,** after reaching its predetermined maximum/fill level of coke, goes through a step of purging initially. The aim of this is step is to separate the gaseous light hydrocarbons from the reaction medium in the coke drum **6A** or **6B** and preventing obstruction of the pores.

Thus, a step called purging or rectification of the bed is initiated. This step consists of injecting steam **9,** usually from 450°C to 500°C, optionally from 470°C to 490°C, further optionally at about 480°C, at the bottom of a coke drum **6A** or **6B,** so that the aforementioned light hydrocarbons are entrained.

Usually, at first, the gaseous top effluent **7** from the coke drum **6A** or **6B** is conveyed via a pipeline **11,** known in the prior art as a transfer line, to the fractionating tower **3.** This is to optimize production and the thermal balance of the unit, with recovery of oily fractions by distillation of its various cuts. This can last for a period of time from approximately 15 minutes to around 1 hour, for example.

Then, after that, another portion of the aforementioned gaseous top effluent **7** from the coke drum **6A** or **6B** can be conveyed to a blowdown system **13,** where there is cooling and separation of the gaseous, aqueous and oily phases, which are then returned to the process.

The gaseous top effluent **7** can leave at a temperature of approximately 400°C, which, initially, makes it impractical to withdraw the coke from the coke drum **6A** or **6B.** After a time, which may be from approximately 15 minutes to 1 hour for example, depending on the design of the unit, the purging step is followed by a cooling step.

In the cooling step, the steam provided to the coke drum **6A** or **6B** can be replaced with industrial liquid water, resulting in a process of continuous reduction of the temperature of the coke bed. Water **12,** can be obtained from a clarified water tank (not shown in the figure) and/or from the vessel for water/oil separation **19.** The reduction of temperature in the drum **6A** or **6B** normally takes place with continuous flow of fluid to prevent blocking of the pores in the coke bed. Eventually, the temperature falls to the point where a column of liquid water forms, which fills the empty spaces of the drums up to their maximum level. During this stage, the gaseous top effluent **7** leaving the drum has also been cooled by the water **12.**

It should be pointed out that the residual feed **4** normally leaves the furnace **5** at about 500°C, and as such reaches the inlet of the drums typically at a temperature of from 450°C to 500°C, often from 470°C to 490°C, and more often around 480°C. The vapours typically leave the top of the reactors in the range from 435 to 445°C, depending on the severity of the operation. The temperature of the coke bed may be interpolated approximately within this range during the filling phase.

As purging takes place immediately after filling the reactor, the steam will meet the coke mass at a temperature level above its own temperature, so that the steam tends to cool the bed, as well as the cooling water that will come next, which will be vaporized first, generating continuity in the process of rectification of the bed, before there is in fact formation of a liquid water level. However, despite the inevitable cooling action of the steam during the purging step, the skilled person readily understands the difference between such a purging step and the following cooling step.

For the coke withdrawal procedures to begin, the temperature at the surface of the coke drum **6A or 6B** is preferably less than or equal to 100°C. Moreover, the reactions tend to continue at temperatures close to 400°C. Thus, water **10** is injected at the bottom of a coke drum **6A or 6B** until the temperature reaches a range suitable for stopping the reactions and it is possible to remove the deposited coke. This step is called the cooling step. The water **10** injected at the base of the drum, on coming into contact with the coke mass, vaporizes and leaves from the top of the coke drum **6A or 6B** and goes to the blowdown system **13** at a temperature initially close to 400°C.

The blowdown system **13** has the purpose of separating the water from the light hydrocarbons produced in the coke drum **6A or 6B.** For this, the gaseous top effluent **7** from the coke drum **6A or 6B,** initially at around 400°C for example, is typically cooled to a temperature close to around 180°C before entering the blowdown vessel **14.** This cooling can be obtained by injecting a water stream **12** at the inlet or into the feed of the blowdown vessel **14.** In the blowdown vessel **14,** the gaseous effluent from the top **7** of the coke drum **6A or 6B,** cooled by the water stream **12,** can separate into two streams: a gaseous top stream **15,** formed from a mixture of light hydrocarbons and steam, and a liquid bottom stream **16,** formed from heavier hydrocarbons.

The top stream **15** passes through a cooling system **17,** from where an effluent **18** can be obtained, which can be sent to a water/oil separating vessel **19.** The gas phase **20** and the (acid) water can be separated, so that the water **AA** can be used for injection **12** into the blowdown vessel **14** or sent to storage tanks (not shown in the figure) for example. The liquid phase **21,** consisting of hydrocarbons, can be sent initially to a residue vessel **22.** From there, a fraction of the liquid phase **21,** stored in the residue vessel **22,** can be mixed with a fraction **22B** of the bottom stream **16** and sent **R3** to the fractionating tower **3,** or feed tanks or other vessel (not shown in the figures).

A fraction of the bottom stream **16** can pass through a second cooling system **23** and be recycled to the blowdown vessel **14,** whilst another fraction **22B** can be mixed with the effluent **22A** from the residue vessel **22** and sent **R3** to the fractionating tower **3.**

Returning to the coke drum **6A** or **6B,** there then follow steps of opening vents, flanges or valves, with manual or automatic opening, at top and bottom of the drums, for water drainage. After that comes the step of boring and cutting of the coke, which is carried out using high-pressure pumps and suitable tools for boring and cutting with water. Then, the drum can be emptied and inspected internally. After that it can be prepared for a new filling step. This usually occurs whilst the other drum of the pair is in its final filling step. In the final steps for return to operation, the reactor/drum is closed, purged with steam to remove traces of air, tested for leaks and preheated with a proportion of the hydrocarbon vapours from the drum in the final phase of filling with coke.

As discussed above, the blowdown system has a function in recovery of the oily, aqueous and gaseous phases arising from the coke bed in the phases of steam purging and for cooling of the bed. However, the blowdown system is also able to process the liquids (oil and water) condensed on the inside of the walls of the drums in the phase of heating the metal constituting the wall of the drums, in preparation for the drums receiving the feed. In this case, the fluids leave at the bottom of the drum (not shown). The blowdown system is typically designed to be a single system for the delayed coker unit, regardless of the number of pairs of drums. DCUs may operate with several pairs of drums, as a rule depending on their capacity.

The blowdown system operates by adapting to the operational requirements of the reactors and fractionator, although not necessarily in precise synchronism, since it has vessels with volumes that permit independent residence times. It may be regarded as a system for processing residues generated by the delayed coker unit (thus avoiding generating residues itself). Besides the process inherent in the operation of the DCU, it possesses flexibility for treating external streams of residues: either envisaged in the design or during the natural pauses that this system has, it can be explored for receiving and processing internal refinery residues.

When not processed directly in the drums (coke bed), the residues from a refinery must usually be practically free from solids, must have a low water content (must have a low BSW index - *Basic Sediments and Water*) and must have undergone little emulsification in relation to the difficulties of separation in the blowdown system.

When it is guaranteed that the residue is water-free (not always a trivial matter), it may be sent directly to the fractionating tower. To a limited extent, in relation to the small volume used for this purpose, the residue may also be sent for quenching the effluent from the drums of the DCU.

The limitations imposed on the refinery residues to be processed in the coking drums (coke bed), conventionally relate to the oil content of the residue to be injected and the concentration and granulometry of the solids. Those limitations are overcome by the present invention.

The present invention solves the problems described above by means of a process for treating residual oils from refineries in coke drums **6A, 6B** of delayed coking units (DCUs). The processing comprises injection of the residues **29** into coke drums **6A, 6B** in the coke bed purge phase. This can occur together with injection of pressurized steam **9.** Preferably, injection of the residues **29** takes place from the beginning of the coke bed purge phase, and may extend as far as the cooling step of the coke bed with liquid water **10.**

In a preferred embodiment, injection of the residues **29** is carried out at the maximum flow rate (between 230 and 240 m3/d) for approximately 15 minutes to 1 hour, ideally 30 to 45 minutes, during purge of the reactor **6A, 6B** to the blowdown system **13.** However, purge may continue not only to the blowdown system **13,** but also to the fractionating tower **3.**

The residues **29** may be injected into coke drums **6A, 6B** through a pipeline **28.** The injection may be controlled by a valve controlling the residue flow rate **24** by means of an instrument **26** for measuring flow rate. In particular, the system proposed for the process of the present invention can also have two blocking valves, preferably of the slide-valve type **25,** and one further blocking valve, preferably of the globe type **27,** which allow better control of the process now described.

Preferably, the purge phase begins after the maximum level (and/or the predetermined fill level) of coke in the drums **6A, 6B** has been reached with processing of the feed stream from the furnace **5.** Purging is carried out with steam **9** injected at a temperature of from 450°C to 500°C, optionally from 470°C to 490°C, further optionally of about 480°C.

The cooling step of the coke drum is initiated after the end of the purge. The steam **9** used for the purge can be replaced with liquid water **10.** The cooling phase is typically halted when a column of liquid water forms, which fills the empty spaces of the coke drum **6A, 6B** up to their maximum level. As such, the cooling step is usually halted when the temperature at the surface of the coke drum **6A, 6B** reaches a value less than or equal to 100°C.

As proposed here, the residues may be injected directly into the coke drums, dispensing with prior steps of separation of solids or treatments with demulsifying chemicals. In other words, the residues may be supplied to the coke drums directly from the unit processes producing the residues (and/or via storage) without any additional processing to prepare the residues for use in the drums. Nonetheless, depending on the solids content of the residual feeds and the desired level of processing, the residues may optionally be injected into the coke drums **6A, 6B** after processing in two-phase decanter centrifuges.

### Practical tests

Three tests were carried out with injection of residues into the coke drums at the maximum flow rate (between 230 and 240 m3/d) for approximately 1 hour during purge of the reactor to the blowdown system. Injection was halted before starting the cooling step.

Table 1 shows the results obtained for the quality of the coke in tests 1 and 2 in percentages by measured weight of volatile material, measured weight of ash and calculated fixed carbon (the calculation based on the assumption that the fixed carbon accounts for the remainder of the weight not provided by the volatile material and ash). Table 2 gives the respective reference values for the tests conducted.

**Table 1: Quality of the coke obtained**

| | **Volatile material (wt%)** | | **Ash (wt%)** | | **Calc. Fixed Carbon (wt%)** | |
|---|---|---|---|---|---|---|
| **Region** | **TEST 1** | **TEST 2** | **TEST 1** | **TEST 2** | **TEST 1** | **TEST 2** |
| Top | 9.95 | 11.56 | 0.05 | 0.09 | 90.00 | 88.35 |
| Middle | 7.86 | 8.98 | 0.11 | 0.16 | 92.03 | 90.86 |
| Bottom | 11.69 | 8.25 | 0.08 | 0.06 | 88.23 | 91.69 |

**Table 2: Reference values**

| Reference values | **Volatile material (wt%)** | **Ash (wt%)** | **Calc. Fixed Carbon (wt%)** |
|---|---|---|---|
| Limits | Maximum: 15 | Max.: 0.5 | Minimum: 84 |
| Typical | 11.49 | 0.11 | 88.34 |

In the process according to the present invention, the residue **29,** preferably injected concomitantly with steam **9** in the coke bed purge phase, is submitted to successful separation of oil/water phases in its own fractionator **3** or in the blowdown system **13,** by utilizing the thermal energy accumulated in the coke bed, dispensing with the use of demulsifying products.

Furthermore, by employing the coke bed itself as filtering medium for the solids present in the residue stream **29,** the process of the present invention generally displays great tolerance to the solids content of the residual feeds.

As can be seen from the data in Table 1 and according to the tests performed, there was no significant variation in the quality of the coke obtained. It was also observed that there was no significant effect on the product streams from the fractionator (a volume of 10 m³ is not significant). Moreover, there was no sign of obstruction of the coke bed, since the phases of purge and cooling took place normally, and without emanation of odours (and based on a visual analysis).

Based on the results obtained, the following advantages may be observed for the process proposed by the present invention:
- The process makes it possible to maximize the volume of residue received;
- It is possible to receive streams at times when the blowdown vessel may have operational difficulty (very high level, excess water);
- There are no effects on the fractionator or on the quench inlet lines when water is received in the residue;
- It is possible to process emulsions that exhibit difficulty of separation in blowdown;
- There is the possibility of removing the solid residues, so that they are not deposited in the vessels or in the filters of the blowdown pumps;
- Low capital cost of modifying the refinery's existing system.

The preceding description of the system and process for treating residual oils from refineries in coke drums of DCUs, according to the present invention, must only be regarded as one possible embodiment or possible embodiments, and any particular features introduced therein are to be understood only as being written for facilitating comprehension. Accordingly, the scope of the invention is defined in the claims given hereunder.

## Claims

1. Process for treating residues in coke drums of a delayed coking unit (DCU), said process comprising:
operating a delayed coker unit so that coke is deposited in a coke drum (6A, 6B);
subsequently entering a purge phase, in which the deposited coke is purged of gaseous light hydrocarbons; and
a step of cooling, after the purge phase, the deposited coke using liquid water from a water stream (10);
wherein the purge phase comprises injecting the residues from a residues stream (29) into the coke drum (6A, 6B), and
**characterised in that**:
the injecting of the residues continues into the cooling step.

2. Process according to claim 1, wherein the purge phase begins after the maximum level of coke in the drum (6A, 6B) has been reached.

3. Process according to claim 1 or 2, wherein the injecting of the residues into the coke drum occurs together with pressurized steam (9).

4. Process according to any one of the preceding claims, wherein the purge phase is carried out with steam (9).

5. Process according to any preceding claim, wherein the cooling step is halted when a column of liquid water forms that fills the empty space of the coke drum (6A, 6B) up to its maximum level.

6. Process according to any one of claims 3 to 4, wherein the cooling step is halted when the temperature at the surface of the coke drum (6A, 6B) is less than or equal to 100°C.

7. Process according to any one of the preceding claims, wherein the residues (29) are injected directly into the coke drum (6A, 6B), dispensing with prior steps of separation of solids or treatments with demulsifying chemicals.

8. Process according to any one of the preceding claims, wherein the residues (29) are injected into the coke drum (6A, 6B) after processing in two-phase decanter centrifuges.

9. Process according to any one of the preceding claims, wherein the residues comprise solid residues generated in petroleum refining.

10. Process according to claim 9, wherein the residues comprise one or more of spent catalysts, biological sludge, mud from rainwater ditches, oil wastes generated at the bottom of tanks for petroleum and derivatives, oil-contaminated solids, absorbent clays, and/or coke fines.

11. Process according to any one of the preceding claims, wherein the residues comprise oil and water phases.

12. Process according to any one of the preceding claims, wherein operating the delayed coker unit comprises providing a vacuum residue from a vacuum distillation unit as a feed for the delayed coker unit.

## Patentansprüche

1. Verfahren zum Behandeln von Rückständen in Kokstrommeln einer Delayed-Coking-Einheit (DCU), wobei das Verfahren Folgendes umfasst:
Betreiben einer Delayed-Coker-Einheit, sodass Koks in einer Kokstrommel (6A, 6B) abgeschieden wird;
anschließendes Eintreten in eine Reinigungsphase, in der das abgeschiedene Koks von gasförmigen leichten Kohlenwasserstoffen bereinigt wird; und
einen Schritt des Kühlens, nach der Reinigungsphase, des abgeschiedenen Kokses unter Verwendung von flüssigem Wasser von einem Wasserstrom (10);
wobei die Reinigungsphase das Injizieren der Rückstände von einem Rückständestrom (29) in die Kokstrommel (6A, 6B) umfasst und
**dadurch gekennzeichnet, dass**:
das Injizieren der Rückstände im Kühlschritt fortfährt.

2. Verfahren nach Anspruch 1, wobei die Reinigungsphase beginnt, nachdem der Höchstwert von Koks in der Trommel (6A, 6B) erreicht wurde.

3. Verfahren nach Anspruch 1 oder 2, wobei das Injizieren der Rückstände in die Kokstrommel zusammen mit unter Druck stehendem Dampf (9) erfolgt.

4. Verfahren nach einem der vorhergehenden Ansprüche, wobei die Reinigungsphase mit Dampf (9) ausgeführt wird.

5. Verfahren nach einem vorhergehenden Anspruch, wobei der Kühlschritt angehalten wird, wenn sich eine Wassersäule bildet, die den leeren Raum der Kokstrommel (6A, 6B) bis zu seinem Höchstwert füllt.

6. Verfahren nach einem der Ansprüche 3 bis 4, wobei der Kühlschritt angehalten wird, wenn die Temperatur an der Oberfläche der Kokstrommel (6A, 6B) weniger als oder gleich 100 °C ist.

7. Verfahren nach einem der vorhergehenden Ansprüche, wobei die Rückstände (29) unmittelbar in die Kokstrommel (6A, 6B) injiziert werden, wobei auf vorausgehende Schritte der Trennung von Feststoffen oder Behandlungen mit Demulgatoren verzichtet wird.

8. Verfahren nach einem der vorhergehenden Ansprüche, wobei die Rückstände (29) nach dem Verarbeiten in zweiphasigen Dekanterzentrifugen in die Kokstrommel (6A, 6B) injiziert werden.

9. Verfahren nach einem der vorhergehenden Ansprüche, wobei die Rückstände feste Rückstände umfassen, die durch Erdölraffinierung erzeugt werden.

10. Verfahren nach Anspruch 9, wobei die Rückstände einen oder mehrere aus verbrauchtem Katalysator, Bioschlamm, Schlamm von Regenwassergräben, Ölabfällen, die am Boden von Tanks für Erdöl und Derivate erzeugt werden, ölkontaminierten Feststoffen, absorbierenden Tonen und/oder Koksgrus umfassen.

11. Verfahren nach einem der vorhergehenden Ansprüche, wobei die Rückstände Öl- und Wasserphasen umfassen.

12. Verfahren nach einem der vorhergehenden Ansprüche, wobei das Betreiben der Delayed-Coker-Einheit das Bereitstellen eines Vakuumrückstands von einer Vakuumdestillationseinheit als eine Zufuhr für die Delayed-Coker-Einheit umfasst.

## Revendications

1. Procédé destiné au traitement des résidus dans des tambours à coke d'une unité de cokéfaction retardée (DCU), ledit procédé comprenant :
l'utilisation d'une unité de cokéfaction retardée de sorte que le coke est déposé dans un tambour à coke (6A, 6B) ;
puis l'entrée dans une phase de purge, dans laquelle le coke déposé est purgé de ses hydrocarbures gazeux légers ; et
une étape de refroidissement, après la phase de purge, le coke déposé utilisant de l'eau liquide provenant d'un flux d'eau (10) ;
où la phase de purge comprend l'injection des résidus provenant d'un flux de résidus (29) dans le tambour à coke (6A, 6B), et
**caractérisé en ce que** :
l'injection des résidus se poursuit dans l'étape de refroidissement.

2. Procédé selon la revendication 1, dans lequel la phase de purge commence après que le niveau maximum du coke dans le tambour (6A, 6B) ait été atteint.

3. Procédé selon la revendication 1 ou la revendication 2, dans lequel l'injection des résidus dans le tambour à coke intervient conjointement avec de la vapeur sous pression (9).

4. Procédé selon l'une quelconque des revendications précédentes, dans lequel la phase de purge est réalisée avec la vapeur (9).

5. Procédé selon une quelconque revendication précédente, dans lequel l'étape de refroidissement est interrompue lorsqu' une colonne d'eau liquide se forme, qui remplit l'espace vide du tambour à coke (6A, 6B) jusqu'à son niveau maximum.

6. Procédé selon l'une quelconque des revendications 3 ou 4, dans lequel l'étape de refroidissement est interrompue lorsque la température à la surface du tambour à coke (6A, 6B) est inférieure ou égale à 100° C.

7. Procédé selon l'une quelconque des revendications précédentes, dans lequel les résidus (29) sont injectés directement dans le tambour à coke (6A, 6B), se dispensant des étapes antérieures de séparation des solides ou de traitement par des produits chimiques de désémulsification.

8. Procédé selon l'une quelconque des revendications précédentes, dans lequel les résidus (29) sont injectés dans le tambour à coke (6A, 6B) après traitement dans des centrifugeuses de décantation en deux phases.

9. Procédé selon l'une quelconque des revendications précédentes, dans lequel les résidus comprennent des résidus solides générés dans le raffinage du pétrole.

10. Procédé selon la revendication 9, dans lequel les résidus comprennent un ou plusieurs résidus parmi les catalyseurs usés, la boue biologique, la boue provenant des rigoles d'eau de pluie, les déchets pétroliers générés au fond des réservoirs de pétrole et de produits dérivés, les solides contaminés par du pétrole, les argiles absorbantes, et/ou les fines de coke.

11. Procédé selon l'une quelconque des revendications précédentes, dans lequel les résidus comprennent des phases aqueuses et huileuses.

12. Procédé selon l'une quelconque des revendications précédentes, dans lequel l'utilisation de l'unité de cokéfaction retardée comprend la mise à disposition d'un résidu sous vide provenant d'une unité de distillation sous vide en tant que charge pour l'unité de cokéfaction retardée.
